# EUROPÄISCHE PATENTANMELDUNG

(11) **EP 4 293 444 A1**
(43) Veröffentlichungstag der Anmeldung: **20.12.2023**
(21) Anmeldenummer: 22178951.4
(22) Anmeldetag: 14.06.2022
(51) Int. Cl.: G05B 19/401, G05B 19/418

(54) **EINBINDUNG EINES KONTINUIERLICHEN MESSTASTERS IN EINE NUMERISCHE STEUERUNG**

(71) Anmelder: Siemens Aktiengesellschaft, 80333 München (DE)
(72) Erfinder: Kunze, Patrick, 09236 Claußnitz (DE)
(74) Vertreter: Siemens Patent Attorneys

(57) **Zusammenfassung**

Eine Vermessungseinrichtung weist eine Anzahl von lagegeregelten Achsen (1), einen kontinuierlichen Messtaster (3) und eine numerische Steuerung (4) auf. Der kontinuierliche Messtaster (3) wird von der numerischen Steuerung (4) mittels der lagegeregelten Achsen (1) entsprechend einer Abfolge von Sollwertgruppen (Gi) relativ zu einem in der Vermessungseinrichtung gehaltenen zu vermessenden Werkstück (2) verfahren. Die Sollwertgruppen (Gi) umfassen für die lagegeregelten Achsen (1) jeweils einen jeweiligen Lagesollwert (xij*). Die numerische Steuerung (4) gibt zum lagegeregelten Verfahren der lagegeregelten Achsen (1) entsprechend der Abfolge von Sollwertgruppen (Gi) mit einem für die lagegeregelten Achsen (1) einheitlichen Lageregeltakt (T) jeweilige Steuersignale (Cij) an die lagegeregelten Achsen (1) aus und nimmt weiterhin mit dem Lageregeltakt (T) von den lagegeregelten Achsen (1) jeweilige Lageistwerte (xij) entgegen. Zusätzlich zu den jeweiligen Lageistwerten (xij) der lagegeregelten Achsen (1) nimmt die numerische Steuerung (4) mit dem Lageregeltakt (T) auch ein jeweiliges Messsignal (Mi) des kontinuierlichen Messtasters (3) entgegen.

## Beschreibung

Die vorliegende Erfindung geht aus von einem Betriebsverfahren für eine Vermessungseinrichtung,
- wobei ein kontinuierlicher Messtaster der Vermessungseinrichtung mittels einer Anzahl von lagegeregelten Achsen der Vermessungseinrichtung entsprechend einer Abfolge von Sollwertgruppen relativ zu einem in der Vermessungseinrichtung gehaltenen zu vermessenden Werkstück verfahren wird,
- wobei die Sollwertgruppen für die lagegeregelten Achsen jeweils einen jeweiligen Lagesollwert umfassen,
- wobei eine numerische Steuerung der Vermessungseinrichtung zum lagegeregelten Verfahren der lagegeregelten Achsen entsprechend der Abfolge von Sollwertgruppen mit einem für die lagegeregelten Achsen einheitlichen Lageregeltakt jeweilige Steuersignale an die lagegeregelten Achsen ausgibt und mit dem Lageregeltakt von den lagegeregelten Achsen jeweilige Lageistwerte entgegennimmt.

Die vorliegende Erfindung geht weiterhin aus von einem Steuerprogramm für eine numerische Steuerung, wobei das Steuerprogramm Maschinencode umfasst, dessen Abarbeitung durch die numerische Steuerung bewirkt, dass die numerische Steuerung ein derartiges Betriebsverfahren ausführt.

Die vorliegende Erfindung geht weiterhin aus von einer numerischen Steuerung, die mit einem derartigen Steuerprogramm programmiert ist, so dass sie im Betrieb ein derartiges Betriebsverfahren ausführt.

Die vorliegende Erfindung geht weiterhin aus von einer Vermessungseinrichtung,
- wobei die Vermessungseinrichtung einen kontinuierlichen Messtaster aufweist,
- wobei die Vermessungseinrichtung eine Anzahl von lagegeregelten Achsen aufweist, mittels derer der kontinuierliche Messtaster relativ zu einem in der Vermessungseinrichtung gehaltenen zu vermessenden Werkstück entsprechend einer Abfolge von Sollwertgruppen, welche für die lagegeregelten Achsen jeweils einen jeweiligen Lagesollwert umfassen, verfahrbar ist,
- wobei die Vermessungseinrichtung eine numerische Steuerung aufweist, die mit den lagegeregelten Achsen zum Ausgeben jeweiliger Steuersignale an die lagegeregelten Achsen und zum Entgegennehmen jeweiliger Lageistwerte von den lagegeregelten Achsen verbunden ist.

Derartige Betriebsverfahren und die zugehörigen Gegenstände sind bekannt.

Messtaster sind in verschiedenen Ausgestaltungen bekannt. Meist sind sie entweder als binäre Messtaster oder als kontinuierliche Messtaster ausgebildet.

Ein binärer Messtaster ist ein Messtaster, der ein binäres Messsignal ausgibt, je nachdem, ob der Messtaster das zu vermessende Werkstück berührt oder nicht. Der binäre Messtaster wird also zunächst auf das zu vermessende Werkstück zu gefahren. Während dieses Verfahrvorgangs ist das Messsignal des binären Messtasters 0. Dann kontaktiert der binäre Messtaster das zu vermessende Werkstück. Unmittelbar danach (mit einer ganz geringen Schaltverzögerung, die mit einer ganz geringen, in der Praxis vernachlässigbaren Auslenkung des binären Messtasters verbunden ist) wechselt das Messsignal des binären Messtasters auf 1. Das Messsignal des binären Messtasters bleibt auch dann 1, wenn der binäre Messtaster noch weiter auf das zu vermessende Werkstück zu verfahren wird, der binäre Messtaster also aus einer Referenzposition ausgelenkt wird.

Ein kontinuierlicher Messtaster hingegen ist ein Messtaster, dessen Messsignal nicht rein binär umschaltet, wenn der Messtaster ein Werkstück berührt, sondern dessen Messsignal vom Ausmaß der Auslenkung des Messtasters aus der Referenzposition abhängt. Das Messsignal eines kontinuierlichen Messtasters kann also (innerhalb einer Auflösungsgenauigkeit) einen beliebigen Wert innerhalb eines Wertekontinuums annehmen. Anhand des Messsignals ist somit zusätzlich zum Berühren des Werkstücks als solchem auch das Ausmaß der Auslenkung des Messtasters aus der Referenzposition ermittelbar. Die Auslenkung aus der Referenzposition kann eine lineare Auslenkung oder eine Winkelauslenkung sein. Die Auflösung innerhalb des Wertekontinuums kann nach Bedarf sein. Typisch sind Auflösungen von 8 Bit und mehr, beispielsweise von 10 Bit oder 12 Bit.

Würde ein kontinuierlicher Messtaster auf die gleiche Art und Weise wie ein binärer Messtaster auf das Werkstück zu verfahren, wäre das Messsignal des kontinuierlichen Messtasters während dieses Verfahrvorgangs 0. Dann kontaktiert der kontinuierliche Messtaster das zu vermessende Werkstück. Wenn sodann der kontinuierliche Messtaster weiter auf das zu vermessende Werkstück zu verfahren wird, wird der kontinuierliche Messtaster aus seiner Referenzposition ausgelenkt. Dadurch steigt das Messsignal des Messtasters allmählich von 0 auf seinen Maximalwert (beispielsweise 1). Es erfolgt jedoch nicht ein binärer Sprung auf den Maximalwert.

Aus diesem Grund wird ein kontinuierlicher Messtaster auch auf andere Art und Weise betrieben als ein binärer Messtaster. Ein binärer Messtaster wird meist derart bewegt, dass er an eine bestimmte Position in der Nähe des Werkstücks verfahren wird und dann derart bewegt wird, dass er die Oberfläche des Werkstücks im Wesentlichen aus einer Normalenrichtung der Oberfläche des Werkstücks an dieser Stelle berührt. Nach dem Wechsel des Messsignals des binären Messtasters wird der binäre Messtaster wieder vom Werkstück weg verfahren und zu einer anderen Position in der Nähe des Werkstücks verfahren. Dort wird die obenstehend erläuterte Vorgehensweise wiederholt. Auf diese Art und Weise wird das Werkstück Punkt für Punkt abgetastet. Ein kontinuierlicher Messtaster hingegen wird üblicherweise zwar zunächst derart bewegt, dass er an eine bestimmte Position in der Nähe des Werkstücks verfahren wird und dann derart bewegt wird, dass er die Oberfläche des Werkstücks im Wesentlichen aus einer Normalenrichtung der Oberfläche des Werkstücks an dieser Stelle berührt. Dann wird der kontinuierliche Messtaster jedoch weiter in dieser Richtung bewegt, bis das Messsignal einen mittleren Wert in der Mitte zwischen 0 und dem Maximalwert annimmt (beispielsweise 0,5). Sodann wird der kontinuierliche Messtaster in einer Richtung bewegt, die im Wesentlichen parallel zur Oberfläche des Werkstücks verläuft, in jedem Fall aber deutlich von der Normalenrichtung abweicht. An jeder neuen Positionierung wird erneut ein Messsignal des kontinuierlichen Messtasters erfasst. Dadurch ist eine erheblich schnellere Abtastung des Werkstücks möglich.

Im Stand der Technik wird das Messsignal des kontinuierlichen Messtasters in manchen Fällen einer Recheneinrichtung zugeführt, die mit der numerischen Steuerung steuerungstechnisch nicht gekoppelt ist. Ein typisches Beispiel einer derartigen Recheneinrichtung ist ein PC. Im Falle der Zuführung der Messsignale zu der Recheneinrichtung können die erfassten Messsignale der jeweiligen konkreten Positionierung des Messtasters, wie sie durch die Lageistwerte der lagegeregelten Achsen gegeben ist, nicht zugeordnet werden. In anderen Fällen wird das Messsignal des kontinuierlichen Messtasters einer speicherprogrammierbaren Steuerung (SPS bzw. PLC = programmable logic control) zugeführt, die mit der numerischen Steuerung steuerungstechnisch gekoppelt ist. In diesem Fall besteht zwar eine Kopplung, die Erfassung der Messsignale des kontinuierlichen Messtasters ist aber mit dem Lageregeltakt, mit dem die Lageistwerte der lagegeregelten Achsen erfasst werden, nicht synchronisiert. Auch in diesem Fall können die erfassten Messsignale der jeweiligen konkreten Positionierung des Messtasters, wie sie durch die Lageistwerte der lagegeregelten Achsen gegeben ist, nicht zugeordnet werden. Kontinuierliche Messtaster sind daher nur in beschränktem Umfang einsetzbar.

Die Aufgabe der vorliegenden Erfindung besteht darin, Möglichkeiten zu schaffen, mittels derer die Einsatzmöglichkeiten von kontinuierlichen Messtastern erheblich erweitert werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren der eingangs genannten Art dadurch ausgestaltet, dass die numerische Steuerung mit dem Lageregeltakt zusätzlich zu den jeweiligen Lageistwerten der lagegeregelten Achsen auch ein jeweiliges Messsignal des kontinuierlichen Messtasters entgegennimmt.

Damit steht - synchron mit den Lageistwerten des jeweiligen Lageregeltaktes - auch das zugehörige Messsignal des kontinuierlichen Messtasters zur Verfügung. Das jeweilige Messsignal kann daher direkt den entsprechenden Lageistwerten zugeordnet werden.

Vorzugsweise wird der kontinuierliche Messtaster von der numerischen Steuerung wie eine weitere lagegeregelte Achse behandelt.

Die Behandlung als lagegeregelte Achse bedeutet, dass der numerischen Steuerung für jeden Lageregeltakt auch ein "Lagesollwert" für den kontinuierlichen Messtaster bekannt ist und dass die numerische Steuerung unter Berücksichtigung dieses "Lagesollwertes" und des zugehörigen Messsignals des kontinuierlichen Messtasters (= "Lageistwert") für jeden Lageregeltakt auch ein "Steuersignal" für den kontinuierlichen Messtaster ermittelt. Dieses "Steuersignal" kann von der numerischen Steuerung sogar an den kontinuierlichen Messtaster oder eine andere Einrichtung ausgegeben werden. Das für den Messtaster bestimmte jeweilige Steuersignal bewirkt jedoch nichts, da es entweder von der numerischen Steuerung nicht ausgegeben wird oder von dem kontinuierlichen Messtaster bzw. der anderen Einrichtung zwar entgegengenommen wird, aber nicht zur tatsächlichen Ansteuerung einer lagegeregelten Achse verwendet wird.

Diese Vorgehensweise ermöglicht es insbesondere, das jeweilige Messsignal innerhalb der numerischen Steuerung auf einfache Art und Weise zu verarbeiten. Auch sind keinerlei prinzipielle Modifikationen der numerischen Steuerung erforderlich. Die numerische Steuerung muss lediglich derart ausgelegt sein, dass sie eine hinreichend große Anzahl an lagegeregelten Achsen ansteuern kann und insbesondere deren Lagesollwerte entgegennehmen kann. Wenn also - beispielsweise - die Vermessungseinrichtung fünf lagegeregelte Achsen aufweist, muss die numerische Steuerung in der Lage sein, sechs lagegeregelte Achsen (5+1 = 6) zu steuern.

Vorzugsweise speichert die numerische Steuerung die entgegengenommenen Messsignale zusammen mit den entgegengenommenen Lageistwerten und/oder den Lagesollwerten in Form einer Historie ab, so dass sie für spätere Auswertungen zur Verfügung stehen. Dadurch stehen die Messsignale nicht nur momentan, sondern auch später zur Verfügung, sei es im Sinne einer späteren Auswertung kurz nach der Erfassung, sei es im Sinne einer Archivierung beispielsweise zu Zwecken der Dokumentation oder Gewährleistung. Eine Abspeicherung zusammen nur mit den Lagesollwerten kann sinnvoll sein, wenn gewährleistet ist, dass die Abweichung der Lageistwerte von den Lagesollwerten klein genug ist.

Vorzugsweise gibt die numerische Steuerung die entgegengenommenen Messsignale als Funktion der Zeit oder als Funktion des anhand der jeweiligen Lageistwerte oder der jeweiligen Lagesollwerte bestimmten Ortes über eine Mensch-Maschine-Schnittstelle der numerischen Steuerung an eine Bedienperson der Vermessungseinrichtung aus. Dadurch ist auf einfache Art und Weise eine Überwachung und Kontrolle durch die Bedienperson möglich. Das Ausgeben kann nachträglich erfolgen. Es ist aber sogar bereits während Erfassung der Messsignale möglich, insbesondere mit dynamischer Fortschreibung. Analog zur Abspeicherung der Messsignale zusammen mit den Lagesollwerten ist die Bestimmung des Ortes anhand der Lagesollwerte dann sinnvoll, wenn gewährleistet ist, dass die Abweichung der Lageistwerte von den Lagesollwerten klein genug ist.

Vorzugsweise nimmt die numerische Steuerung eine Vorverarbeitung der erfassten Messsignale vor. Dadurch können systematische Fehler auf einfache Art und Weise berücksichtigt und korrigiert werden. Die Vorverarbeitung kann beispielsweise einer Kompensation einer Temperaturabhängigkeit der Messsignale oder einer Kompensation einer Abhängigkeit der Messsignale von den Lageistwerten der lagegeregelten Achsen oder eine Abhängigkeit der Messsignale von einer Richtung der Verfahrbewegung dienen. Die Richtung der Verfahrbewegung ist durch die zeitliche Ableitung der Gruppen von Lagesollwerten bestimmt.

Die Aufgabe wird weiterhin durch ein Steuerprogramm mit den Merkmalen des Anspruchs 6 gelöst. Erfindungsgemäß bewirkt die Abarbeitung des Steuerprogramms, dass die numerische Steuerung ein erfindungsgemäßes Betriebsverfahren ausführt.

Die Aufgabe wird weiterhin durch eine numerische Steuerung mit den Merkmalen des Anspruchs 7 gelöst. Erfindungsgemäß ist die numerische Steuerung mit einem erfindungsgemäßen Steuerprogramm programmiert, so dass die numerische Steuerung ein erfindungsgemäßes Betriebsverfahren ausführt.

Die Aufgabe wird weiterhin durch eine Vermessungseinrichtung mit den Merkmalen des Anspruchs 8 gelöst. Erfindungsgemäß ist eine Vermessungseinrichtung der eingangs genannten Art dadurch ausgestaltet, dass die numerische Steuerung mit dem kontinuierlichen Messtaster zum Entgegennehmen von Messsignalen des kontinuierlichen Messtasters verbunden ist und die numerische Steuerung mit einem erfindungsgemäßen Steuerprogramm programmiert ist, so dass sie im Betrieb ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Vermessungseinrichtung,
- FIG 2: ein Ablaufdiagramm,
- FIG 3: ein Werkstück und einen kontinuierlichen Messtaster in einem ersten und einem zweiten Zustand,
- FIG 4: eine mögliche Kennlinie eines kontinuierlichen Messtasters,
- FIG 5: ein Werkstück und einen kontinuierlichen Messtaster in einem dritten Zustand,
- FIG 6: ein weiteres Ablaufdiagramm,
- FIG 7: das Werkstück und den kontinuierlichen Messtaster von FIG 5 aus einer Richtung VII in FIG 5,
- FIG 8: ein weiteres Ablaufdiagramm,
- FIG 9: ein ausgegebenes Bild und
- FIG 10: ein weiteres ausgegebenes Bild.

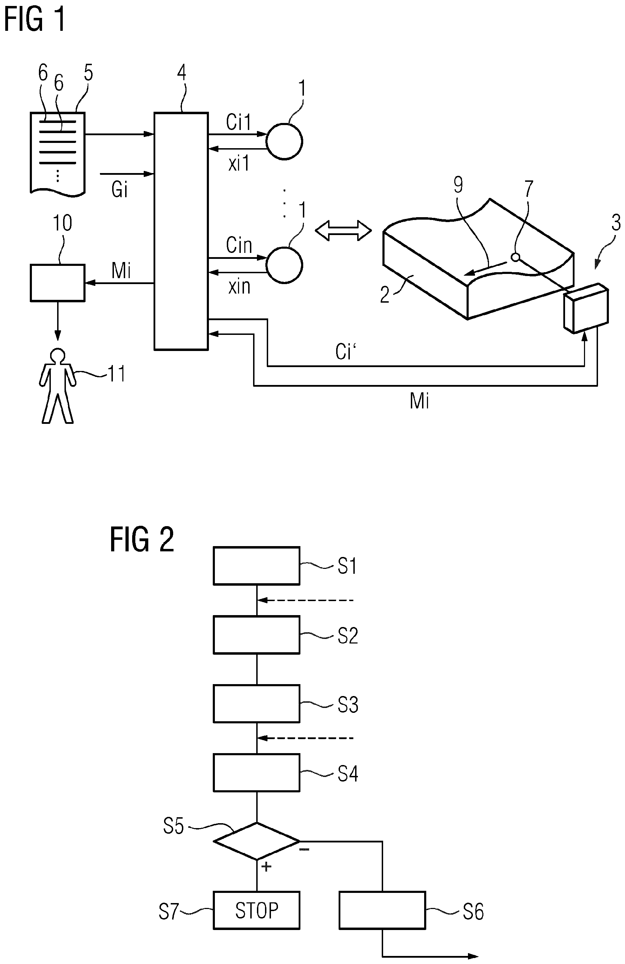

Gemäß FIG 1 weist eine Vermessungseinrichtung eine Anzahl von lagegeregelten Achsen 1 auf. Die Anzahl n an lagegeregelten Achsen 1 kann nach Bedarf bestimmt sein. Minimal liegt die Anzahl n bei 1. Im Regelfall ist die Anzahl n an lagegeregelten Achsen 1 jedoch größer als 1. Oftmals liegt sie bei n = 3 oder darüber. In der Vermessungseinrichtung ist weiterhin ein Werkstück 2 gehalten (eingespannt). Das Werkstück 2 soll in der Vermessungseinrichtung vermessen werden.

Die Vermessungseinrichtung weist weiterhin einen kontinuierlichen Messtaster 3 auf. Es ist möglich, dass der kontinuierliche Messtaster 3 ein fester Bestandteil der Vermessungseinrichtung ist. In vielen Fällen wird die Vermessungseinrichtung jedoch als Werkzeugmaschine ausgebildet sein. Insbesondere in diesem Fall ist der kontinuierliche Messtaster 3 ein von der Vermessungseinrichtung lösbarer Bestandteil der Vermessungseinrichtung.

Die Vermessungseinrichtung weist weiterhin eine numerische Steuerung 4 auf. Die numerische Steuerung 4 ist mit den lagegeregelten Achsen 1 verbunden. Die Verbindung der numerischen Steuerung 4 mit den lagegeregelten Achsen 1 dient einerseits dazu, Steuersignale Cij (Index i = 1, 2, ..., Index j = 1, ... n) an die lagegeregelten Achsen 1 auszugeben. Andererseits dient die Verbindung der numerischen Steuerung 4 mit den lagegeregelten Achsen 1 dazu, von den lagegeregelten Achsen 1 jeweilige Lageistwerte xij (Index i = 1, 2, ..., Index j = 1, ... n) entgegenzunehmen. Im Ergebnis werden die lagegeregelten Achsen 1 dadurch von der numerischen Steuerung 4 gesteuert.

Die numerische Steuerung 4 ist weiterhin auch mit dem kontinuierlichen Messtaster 3 verbunden. Über die Verbindung der numerischen Steuerung 4 mit dem kontinuierlichen Messtaster 3 kann die numerische Steuerung 4 Messsignale Mi (Index i = 1, 2, ...) des kontinuierlichen Messtasters 3 entgegennehmen.

Die numerische Steuerung 4 ist mit einem Steuerprogramm 5 programmiert. Das Steuerprogramm 5 umfasst Maschinencode 6, der von der numerischen Steuerung 4 abarbeitbar ist. Die Abarbeitung des Maschinencodes 6 durch die numerische Steuerung 4 bewirkt, dass die numerische Steuerung 4 ein Betriebsverfahren ausführt, das nachstehend in Verbindung mit FIG 2 und den weiteren FIG näher erläutert wird.

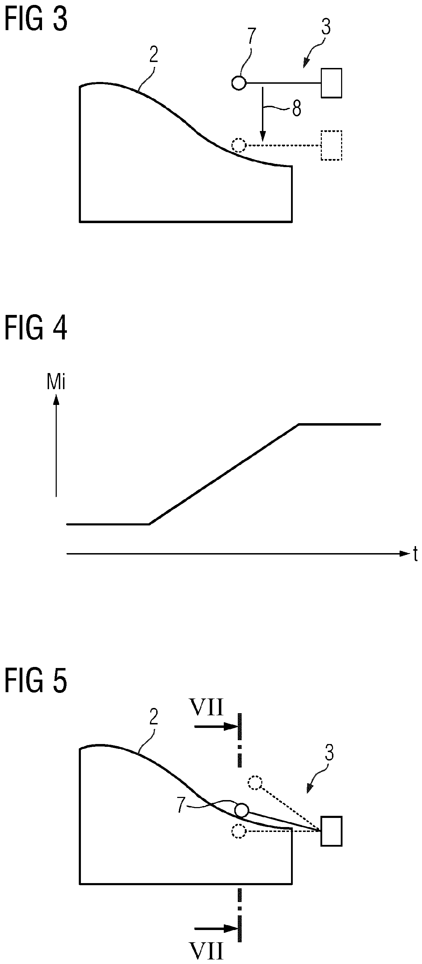

Gemäß FIG 2 positioniert die numerische Steuerung 4 in einem Schritt S1 durch entsprechendes Ansteuern der lagegeregelten Achsen 1 zunächst den kontinuierlichen Messtaster 3 derart, dass der kontinuierliche Messtaster 3(genauer: eine Messspitze 7 des kontinuierlichen Messtasters 3) von dem Werkstück 2 beabstandet ist. Die Messspitze 7 des kontinuierlichen Messtasters 3 befindet sich während dieser Zeit in einer Referenzstellung. FIG 3 zeigt diesen Zustand, wobei dieser Zustand des kontinuierlichen Messtasters 3 FIG 3 in durchgezogenen Linien dargestellt ist.

Sodann verfährt die numerische Steuerung 4 in einem Schritt S2 - wieder durch entsprechendes Ansteuern der lagegeregelten Achsen 1 - den kontinuierlichen Messtaster 3 auf das Werkstück 2 zu, so dass der kontinuierliche Messtaster 3 (genauer: die Messspitze 7) das Werkstück 2 berührt. Auch während dieser Verfahrbewegung befindet sich die Messspitze 7 des kontinuierlichen Messtasters 3 in der Referenzstellung. FIG 3 zeigt auch diesen Zustand, wobei dieser Zustand des kontinuierlichen Messtasters 3 in FIG 3 in gestrichelten Linien dargestellt ist. Die Verfahrbewegung des kontinuierlichen Messtasters 3 erfolgt in der Regel orthogonal oder zumindest im Wesentlichen orthogonal zur Oberfläche des Werkstücks 2. Die Verfahrbewegung des kontinuierlichen Messtasters 3 als solche ist FIG 3 durch einen Pfeil 8 angedeutet. Bis zum Berühren des Werkstücks 2 durch die die Messspitze 7 weist das Messsignal Mi des kontinuierlichen Messtasters 3 gemäß FIG 4 (dort dargestellt als Funktion der Zeit t) einen Minimalwert von beispielsweise 0 auf.

Die numerische Steuerung 4 verfährt den kontinuierlichen Messtaster 3 sodann in einem Schritt S3 - wieder durch entsprechendes Ansteuern der lagegeregelten Achsen 1 - noch weiter auf das Werkstück 2 zu. Die Messspitze 7 wird dadurch aus der Referenzstellung ausgelenkt. Hiermit korrespondierend steigt das Messsignal Mi des kontinuierlichen Messtasters 3 gemäß FIG 4 kontinuierlich bzw. quasikontinuierlich (beispielsweise mit einer Auflösung von 8 Bit, 10 Bit oder 12 Bit) bis auf einen Maximalwert von beispielsweise 1 an.

Der Maximalwert des Messsignals Mi wird - siehe in FIG 5 die gestrichelte Darstellung der Messspitze 7 - bei einer bestimmten Auslenkung der Messspitze 7 erreicht, nachfolgend als Grenzstellung bezeichnet. In der Regel erfolgt das Verfahren des Schrittes S3 so weit, dass die Messspitze 7 sich exakt oder zumindest in etwa in der Mitte zwischen der Referenzstellung und der Grenzstellung befindet, siehe in FIG 5 die durchgezogene Darstellung der Messspitze 7. Ebenfalls in gestrichelten Linien ist in FIG 5 die Referenzstellung der Messspitze 7 dargestellt.

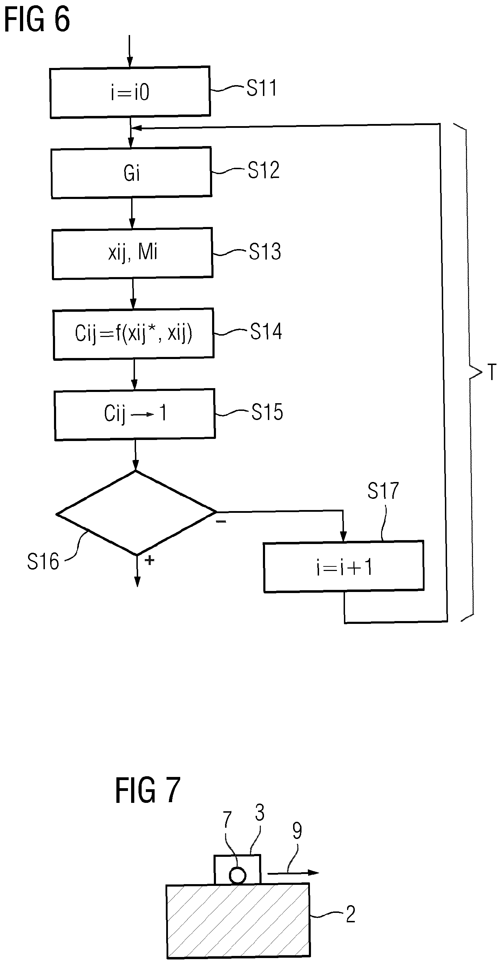

Danach erfolgt in einem Schritt S4 das eigentliche Vermessen des Werkstücks 2. Der Schritt S4 wird später in Verbindung mit FIG 6 detaillierter erläutert werden.

In einem Schritt S5 prüft die numerische Steuerung 4, ob das Vermessen des Werkstücks 2 abgeschlossen ist. Wenn dies nicht der Fall ist, geht die numerische Steuerung 4 zu einem Schritt S6 über. Im Schritt S6 kann die numerische Steuerung 4 - beispielsweise - durch entsprechendes Ansteuern der lagegeregelten Achsen 1 - den kontinuierlichen Messtaster 3 von dem Werkstück 2 abheben, so dass der kontinuierliche Messtaster 3 (genauer: die Messspitze 7) das Werkstück 2 nicht mehr berührt. In diesem Fall geht die numerische Steuerung 4 vom Schritt S6 aus zum Schritt S2 zurück, so dass die Schritte S2 bis S5 erneut ausgeführt werden, natürlich mit anderen Positionierungen. Alternativ kann die numerische Steuerung 4 im Schritt S6 eine Korrektur der durch den Schritt S4 eigentlich definierten Verfahrbewegung vornehmen, um die Auslenkung des kontinuierlichen Messtasters 3 in einem mittleren Bereich zu halten. In diesem Fall geht die numerische Steuerung vom Schritt S6 aus zum Schritt S4 zurück. Sowohl der Übergang zum Schritt S2 als auch der Übergang zum Schritt S4 sind in FIG 2 gestrichelt angedeutet. Auch andere Vorgehensweisen sind denkbar. Wenn die numerische Steuerung nicht zum Schritt S6 übergeht, wird das Vermessen des Werkstücks 2 in einem Schritt S7 abgeschlossen.

Der numerischen Steuerung 4 ist eine Abfolge von Sollwertgruppen Gi (Index i = 1, 2, ..., Index j = 1, ... n) bekannt.

Der Index i steht - wie in analoger Weise auch für andere Fälle, in denen der Index i verwendet wird - für die Stellung der jeweiligen Sollwertgruppe Gi innerhalb der Abfolge von Sollwertgruppen Gi. G1 ist also die erste Sollwertgruppe, G2 die zweite Sollwertgruppe, G3 die dritte Sollwertgruppe usw. Die Sollwertgruppen Gi umfassen für die lagegeregelten Achsen 1 jeweils einen jeweiligen Lagesollwert xij*. Der weitere Index j dient - wie auch für andere Fälle, in denen der Index j verwendet wird - der Bezeichnung der jeweiligen lagegeregelten Achse 1. x42* (Index i = 4, Index j = 2) wäre beispielsweise der vierte Lagesollwert für die zweite lagegeregelte Achse 1.

FIG 6 zeigt eine mögliche Implementierung des Schrittes S4 von FIG 2. Für die Schritte S1, S2 und S3 können ähnliche Implementierungen realisiert sein. Insbesondere kann für die Schritte S2 und S3 sogar eine identische Implementierung realisiert sein.

Gemäß FIG 6 setzt die numerische Steuerung 4 in einem Schritt S11 den Index i auf einen Anfangswert i0, beispielsweise den Wert 1. In einem Schritt S12 selektiert die numerische Steuerung 4 die durch den Index i bestimmte Sollwertgruppe Gi. In einem Schritt S13 nimmt die numerische Steuerung 4 von den lagegeregelten Achsen 1 deren jeweilige Lageistwerte xij entgegen. Zusätzlich nimmt die numerische Steuerung 4 im Schritt S13 von dem kontinuierlichen Messtaster 3 dessen Messsignal Mi entgegen.

In einem Schritt S14 ermittelt die numerische Steuerung 4 anhand der jeweiligen Lagesollwerte xij* der lagegeregelten Achsen 1 und der jeweiligen Lageistwerte xij die Steuersignale Cij für die lagegeregelten Achsen 1. Die Steuersignale Cij für die lagegeregelten Achsen 1 können beispielsweise Drehzahlsollwerte, Stromsollwerte oder eine Kombination derartiger Sollwerte sein. In einem Schritt S15 gibt die numerische Steuerung 4 die ermittelten Steuersignale Cij an die lagegeregelten Achsen 1 aus. Im Ergebnis wird dadurch mittels der lagegeregelten Achsen 1 der kontinuierliche Messtaster 3 relativ zum Werkstück 2 entsprechend der Abfolge von Sollwertgruppen Gi lagegeregelt verfahren. Die Bewegung erfolgt in der Regel im Wesentlichen parallel zur Oberfläche des Werkstücks 2 oder in einem relativ kleinen Winkel dazu. Dies ist in den FIG 1 und 7 durch einen Pfeil 9 angedeutet.

In einem Schritt S16 prüft die numerische Steuerung 4, ob die Abfolge von Sollwertgruppen Gi vollständig abgearbeitet ist, beispielsweise die letzte Sollwertgruppe G abgearbeitet ist oder die Auslenkung der Messspitze 7 in die Nähe ihrer Referenzstellung oder ihrer Grenzstellung kommt. Wenn die Abfolge von Sollwertgruppen Gi vollständig abgearbeitet ist, ist die Vorgehensweise von FIG 6 abgeschlossen. Anderenfalls erhöht die numerische Steuerung 4 in einem Schritt S17 den Index i um 1 und geht sodann zum Schritt S12 zurück.

Die numerische Steuerung 4 führt die Abfolge der Schritte S12 bis S17 mit einem Lageregeltakt T aus. Der Lageregeltakt T ist für die lagegeregelten Achsen 1 einheitlich. Meist liegt der Lageregeltakt T im kleinen ms-Bereich (maximal 10 ms). Oftmals liegt der Lageregeltakt T sogar unter 1 ms, beispielsweise bei 125 µs oder 250 µs. Die genannten Zahlenwerte sind rein beispielhaft.

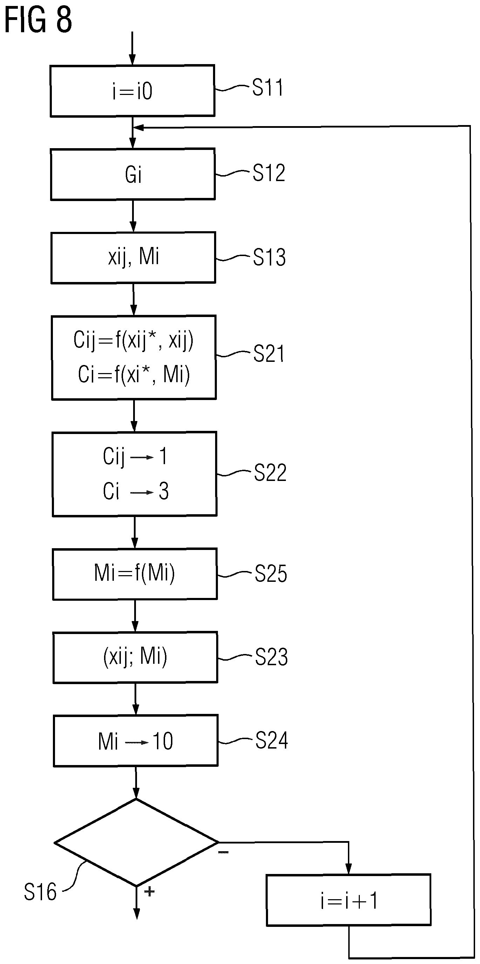

FIG 8 zeigt eine mögliche Ausgestaltung von FIG 6. Konkret zeigt FIG 8 mehrere vorteilhafte Ausgestaltungen gemeinsam. Die vorteilhaften Ausgestaltungen sind jedoch auch einzeln und in beliebiger Kombination realisierbar.

So ist gemäß FIG 8 - Ausgestaltung 1 - der Schritt S14 durch einen Schritt S21 ersetzt. Im Schritt S21 ermittelt die numerische Steuerung 4 - zusätzlich zu den Steuersignalen Cij für die lagegeregelten Achsen 1 - für eine weitere lagegeregelte Achse ein weiteres Steuersignal Ci'. Die numerische Steuerung 4 ermittelt das weitere Steuersignal Ci' anhand eines weiteren Lagesollwertes xi* und des jeweiligen Messsignals Mi. Gegebenenfalls kann zusätzlich auch der Schritt S15 durch einen Schritt S22 ersetzt sein. In diesem Fall gibt die numerische Steuerung 4 das weitere Steuersignal Ci' aus, beispielsweise an den kontinuierlichen Messtaster 3 oder an eine - prinzipiell beliebige - andere Einrichtung. In beiden Fällen - also sowohl bei Ersetzung nur des Schrittes S14 durch den Schritt S21 als auch bei Ersetzung der Schritte S14 und S15 durch die Schritte S21 und S22 - ist die weitere lagegeregelte Achse jedoch nur fiktiv vorhanden, bewirkt also keine tatsächliche Ansteuerung der Vermessungseinrichtung. Aus diesem Grund kann auch der weitere Lagesollwert xi* einen prinzipiell beliebigen Wert aufweisen, da das weitere Steuersignal Ci' keinerlei Wirkung hat. Dies gilt auch für den ermittelten Wert des weiteren Steuersignals Ci'.

Durch die Modifizierung des Schrittes S14 zum Schritt S21, gegebenenfalls zuzüglich der Modifizierung des Schrittes S15 zum Schritt S22, wird erreicht, dass der kontinuierliche Messtaster 3 von der numerischen Steuerung 4 wie eine weitere lagegeregelte Achse behandelt wird.

Weiterhin ist gemäß FIG 8 - Ausgestaltung 2 - zusätzlich ein Schritt S23 vorhanden. Im Schritt S23 speichert die numerische Steuerung 4 das jeweils entgegengenommene Messsignal Mi zusammen mit den entgegengenommenen Lageistwerten xij ab. Die Abspeicherung erfolgt in Form einer Historie. Das neu abgespeicherte Messsignal Mi und die neu abgespeicherten Lageistwerte xij treten also zu den bereits abgespeicherten Messsignalen Mi und den bereits abgespeicherten Lageistwerten xij hinzu, verdrängen diese aber nicht. Dadurch steht die abgespeicherte Abfolge von Messsignalen Mi und Lageistwerten xij für spätere Auswertungen zur Verfügung. Alternativ oder zusätzlich zu den Lageistwerten xij können auch die jeweiligen Lagesollwerte xij* abgespeichert werden.

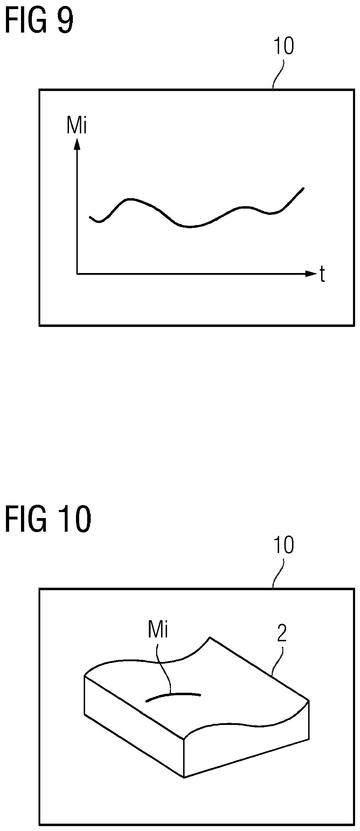

Weiterhin ist gemäß FIG 8 - Ausgestaltung 3 - zusätzlich ein Schritt S24 vorhanden. Im Schritt S24 gibt die numerische Steuerung 4 die entgegengenommenen Messsignale Mi über eine Mensch-Maschine-Schnittstelle 10 der numerischen Steuerung 4 (siehe FIG 1) an eine Bedienperson 11 der Vermessungseinrichtung aus. Die Ausgabe kann entsprechend der Darstellung in FIG 9 als Funktion der Zeit t erfolgen. Alternativ kann die Ausgabe entsprechend der Darstellung in FIG 10 als Funktion des Ortes erfolgen. Der Ort kann nach Bedarf anhand der jeweiligen Lageistwerte xij oder anhand der jeweiligen Lagesollwerte xij* bestimmt werden.

Schließlich ist gemäß FIG 8 - Ausgestaltung 4 - zusätzlich ein Schritt S25 vorhanden. Im Schritt S25 nimmt die numerische Steuerung 4 eine Vorverarbeitung der erfassten Messsignale Mi vor. Der Schritt S25 ist, sofern auch die Schritte S23 und/oder S24 vorhanden sind, den Schritten S23 und/oder S24 vorgeordnet. Er kann sogar dem Schritt S21 vorgeordnet sein oder dem Schritt S21 zwar nachgeordnet sein, dem Schritt S15 oder S22 jedoch vorgeordnet sein. In allen Fällen beeinflusst der Schritt S25 die im Schritt S23 gespeicherten bzw. die im Schritt S24 ausgegebenen Messsignal Mi.

Zusammengefasst betrifft die vorliegende Erfindung somit folgenden Sachverhalt:
Eine Vermessungseinrichtung weist eine Anzahl von lagegeregelten Achsen 1, einen kontinuierlichen Messtaster 3 und eine numerische Steuerung 4 auf. Der kontinuierliche Messtaster 3 wird von der numerischen Steuerung 4 mittels der lagegeregelten Achsen 1 entsprechend einer Abfolge von Sollwertgruppen Gi relativ zu einem in der Vermessungseinrichtung gehaltenen zu vermessenden Werkstück 2 verfahren. Die Sollwertgruppen Gi umfassen für die lagegeregelten Achsen 1 jeweils einen jeweiligen Lagesollwert xij*. Die numerische Steuerung 4 gibt zum lagegeregelten Verfahren der lagegeregelten Achsen 1 entsprechend der Abfolge von Sollwertgruppen Gi mit einem für die lagegeregelten Achsen 1 einheitlichen Lageregeltakt T jeweilige Steuersignale Cij an die lagegeregelten Achsen 1 aus und nimmt weiterhin mit dem Lageregeltakt T von den lagegeregelten Achsen 1 jeweilige Lageistwerte xij entgegen. Zusätzlich zu den jeweiligen Lageistwerten xij der lagegeregelten Achsen 1 nimmt die numerische Steuerung 4 mit dem Lageregeltakt T auch ein jeweiliges Messsignal Mi des kontinuierlichen Messtasters 3 entgegen.

Die vorliegende Erfindung weist viele Vorteile auf. Durch das direkte Einlesen der Messsignale Mi in die numerische Steuerung 4 mit dem Lageregeltakt T stehen die Messsignale Mi der numerischen Steuerung 4 nicht nur sofort zur Verfügung, sondern können auch direkt der aktuellen Position des Messtasters 3 relativ zum Werkstück 2 zugeordnet werden. Dadurch sind verbesserte Auswertungen möglich. Auch können die Messwerte Mi sofort über die Mensch-Maschine-Schnittstelle 10 zur Anzeige gebracht werden. Auch dies ist bei den Lösungen des Standes der Technik nicht möglich. Weiterhin kann der volle Umfang zur Korrektur von Lageistwerten xij wie beispielsweise eine Temperaturkompensation oder eine Richtungsabhängigkeit auch auf die Messsignale Mi angewendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Vermessungseinrichtung,
- wobei ein kontinuierlicher Messtaster (3) der Vermessungseinrichtung mittels einer Anzahl von lagegeregelten Achsen (1) der Vermessungseinrichtung entsprechend einer Abfolge von Sollwertgruppen (Gi) relativ zu einem in der Vermessungseinrichtung gehaltenen zu vermessenden Werkstück (2) verfahren wird,
- wobei die Sollwertgruppen (Gi) für die lagegeregelten Achsen (1) jeweils einen jeweiligen Lagesollwert (xij*) umfassen,
- wobei eine numerische Steuerung (4) der Vermessungseinrichtung zum lagegeregelten Verfahren der lagegeregelten Achsen (1) entsprechend der Abfolge von Sollwertgruppen (Gi) mit einem für die lagegeregelten Achsen (1) einheitlichen Lageregeltakt (T) jeweilige Steuersignale (Cij) an die lagegeregelten Achsen (1) ausgibt und mit dem Lageregeltakt (T) von den lagegeregelten Achsen (1) jeweilige Lageistwerte (xij) entgegennimmt,
**dadurch gekennzeichnet,**
**dass** die numerische Steuerung (4) mit dem Lageregeltakt (T) zusätzlich zu den jeweiligen Lageistwerten (xij) der lagegeregelten Achsen (1) auch ein jeweiliges Messsignal (Mi) des kontinuierlichen Messtasters (3) entgegennimmt.

2. Betriebsverfahren nach Anspruch 1,
**dadurch gekennzeichnet,**
**dass** der kontinuierliche Messtaster (3) von der numerischen Steuerung (4) wie eine weitere lagegeregelte Achse behandelt wird.

3. Betriebsverfahren nach Anspruch 1 oder 2,
**dadurch gekennzeichnet,**
**dass** die numerische Steuerung (4) die entgegengenommenen Messsignale (Mi) zusammen mit den entgegengenommenen Lageistwerten (xij) und/oder den Lagesollwerten (xij*) in Form einer Historie abspeichert, so dass sie für spätere Auswertungen zur Verfügung stehen.

4. Betriebsverfahren nach Anspruch 1, 2 oder 3,
**dadurch gekennzeichnet,**
**dass** die numerische Steuerung (4) die entgegengenommenen Messsignale (Mi) als Funktion der Zeit (t) oder als Funktion des anhand der jeweiligen Lageistwerte (xij) oder der jeweiligen Lagesollwerte (xij*) bestimmten Ortes über eine Mensch-Maschine-Schnittstelle (10) der numerischen Steuerung (4) an eine Bedienperson (11) der Vermessungseinrichtung ausgibt.

5. Betriebsverfahren nach einem der obigen Ansprüche,
**dadurch gekennzeichnet,**
**dass** die numerische Steuerung (4) eine Vorverarbeitung der erfassten Messsignale (Mi) vornimmt.

6. Steuerprogramm für eine numerische Steuerung (4), wobei das Steuerprogramm Maschinencode (6) umfasst, dessen Abarbeitung durch die numerische Steuerung (4) bewirkt, dass die numerische Steuerung (4) ein Betriebsverfahren nach einem der obigen Ansprüche ausführt.

7. Numerische Steuerung, die mit einem Steuerprogramm (5) nach Anspruch 6 programmiert ist, so dass sie im Betrieb ein Betriebsverfahren nach einem der Ansprüche 1 bis 5 ausführt.

8. Vermessungseinrichtung,
- wobei die Vermessungseinrichtung einen kontinuierlichen Messtaster (3) aufweist,
- wobei die Vermessungseinrichtung eine Anzahl von lagegeregelten Achsen (1) aufweist, mittels derer der kontinuierliche Messtaster (3) relativ zu einem in der Vermessungseinrichtung gehaltenen zu vermessenden Werkstück (2) entsprechend einer Abfolge von Sollwertgruppen (Gi), welche für die lagegeregelten Achsen (1) jeweils einen jeweiligen Lagesollwert (xij*) umfassen, verfahrbar ist,
- wobei die Vermessungseinrichtung eine numerische Steuerung (4) aufweist, die mit den lagegeregelten Achsen (1) zum Ausgeben jeweiliger Steuersignale (Cij) an die lagegeregelten Achsen (1) und zum Entgegennehmen jeweiliger Lageistwerte (xij) von den lagegeregelten Achsen (1) verbunden ist,
**dadurch gekennzeichnet,**
**dass** die numerische Steuerung (4) mit dem kontinuierlichen Messtaster (3) zum Entgegennehmen von Messsignalen (Mi) des kontinuierlichen Messtasters (3) verbunden ist und dass die numerische Steuerung (4) mit einem Steuerprogramm (5) nach Anspruch 6 programmiert ist, so dass sie im Betrieb ein Betriebsverfahren nach einem der Ansprüche 1 bis 5 ausführt.
